# EUROPEAN PATENT APPLICATION

(11) **EP 1 829 659 A2**
(43) Date of publication of application: **05.09.2007**
(21) Application number: 07103311.2
(22) Date of filing: 01.03.2007
(51) Int. Cl.: B28B 11/04, B05B 13/02, C04B 41/50

(54) **Method and device for applying a lime-containing surface coating to building elements**

(30) Priority: 01.03.2006 BE 200600131
(71) Applicant: Wienerberger Bricks N.V., 8500 Kortrijk (BE)
(72) Inventor: Debrabander, Renaat, 8900 Ieper (BE); Goossens, Bart, 9940 Sleidinge (BE)
(74) Representative: Ostyn, Frans

(57) **Abstract**

This invention relates to a method for applying a lime-containing surface coating such as lime render to building elements such as facing bricks, in which a series of loose building elements are placed on an open carrier (7), and the surface coating material is applied to the building elements from the upper side and/or the lower side of the carrier (7), and in which the surface coating material is then allowed to dry. This invention also relates to a device by means of which in an at least partially automated process such a lime-containing surface coating can be applied to the abovementioned building elements by the abovementioned method. To this end the device comprises a conveyor (1), (2), (3), (4) with a movable open carrier (7) for the building elements, and application means (12), (13) disposed above and/or below the carrier in order to apply the abovementioned surface coating to the building elements. The carrier (7) comprises level differences, so that the building elements fall down and tilt during their conveyance. As a result of this, a subsequent manual treatment of building elements, such as, inter alia, the lime rendering of facing bricks can be at least partially automated.

## Description

This invention relates to a device and a method for applying a lime-containing surface coating to building elements. The term 'lime-containing surface coating' here refers to a coating which adheres to a surface of a building element and comprises a product containing lime, chalk or cement, so that said coating covers at least a part of said surface or at least changes its appearance.

In particular, this invention relates to a device and a method for applying a lime paint or a lime render to building elements.

An important field of application for this invention is in the application of such a lime-containing surface coating to stone building elements, such as facing bricks, meaning both ceramic and non-ceramic (e.g. concrete) building elements.

It has already been known for a long time to apply a coating of lime render to the brick walls of houses in order to give the house a different appearance. A lime render used for this purpose consists, for example, of cement, lime, sand and water, to which sand and/or pigments and/or known moisture-repellent products may or may not be added. Said lime render is applied manually to the wall, for example using a brush or a spray gun. The quantity applied is, for example, 1 kg of lime render per square metre of wall surface.

A disadvantage of this known method is that the appearance of the lime render coating is influenced by the weather conditions during its application and by the porosity of the bricks. For instance, in dry weather or with a porous substrate the correct procedure is to mist the wall lightly with water beforehand and to repeat this after the wall has been coated, so that the lime render is able to dry slowly. Any hair cracks or fissures that may appear are usually caused by the substrate being too dry or by the application of a lime render that is too thick. Applying lime render on a substrate which is too wet must also be avoided in order to prevent damp patches.

In order to avoid colour differences as a result of differing weather conditions, it is also recommended that one area of the walls should always be finished at a time. Where the substrate is rough or uneven it is recommended that two thinner coats of lime render be applied one after the other on successive days.

Another disadvantage of this known method is that the preparation of the walls (including cleaning and misting if necessary) and the application of the lime render is extremely labour-intensive.

The object of this invention is to provide a device and a method by means of which the abovementioned disadvantages are overcome, and which make it possible to provide building elements, in particular masonry building elements such as, inter alia, facing bricks, in a simple manner with a lime-containing surface coating of excellent and consistent quality.

This object is achieved, on the one hand, by providing a device for applying a lime-containing surface coating to building elements, in which said device comprises a conveyor with at least one carrier on which a series of building elements can be moved past a number of application means which are provided so that they apply the abovementioned surface coating to the building elements, in which the abovementioned carrier comprises at least one aperture, and in which at least one application means is disposed above the carrier and/or below said carrier.

This device makes it possible to provide a series of loose building elements quickly and automatically with a lime-containing surface coating. This means that the building elements can be provided with their lime-containing surface coating before they are processed in a building structure, and the very time-consuming, difficult and labour-intensive manual application of this surface coating is replaced by a quick and simple automatic process.

The surface coating material that does not adhere to the surface of the building elements will run away through the aperture(s) in the carrier. This ensures that during their conveyance the building elements are not lying in a quantity of liquid surface coating material on the carrier, which would mean a surface coating that is not evenly equally spread over the various surfaces being formed on the building elements. An additional advantage of this open carrier is that the excess surface coating material can be collected below the carrier and can be reused.

Owing to the fact that both the upper side and the lower side of the building elements can be reached by the application means, it is also possible to opt for one or more application means to be disposed both above and below the carrier. In this way an even better spread of the surface coating material on all surfaces of the building elements is obtained, and a lime-containing surface coating that is excellent not only from the aesthetic point of view is obtained.

The device can be in the form of a fully automatically operating machine or in the form of a production line requiring the minimum of human intervention, for example only for stacking the treated building elements. When this device is set up in a more or less closed and covered production room, the weather conditions cannot influence the appearance of the surface coating. The device can, of course, also be set up in such a way that it forms part of a production line in which the building elements first undergo another treatment (for example barrel polishing of bricks) and are then automatically supplied to the device according to the invention.

The abovementioned object is also achieved by using a method for applying a lime-containing surface coating to building elements in which a series of loose building elements are placed on an open carrier, and the surface coating material is applied to the building elements from the upper side of the carrier and/or from the lower side of the carrier, and in which the surface coating material is then allowed to dry.

The advantages associated with this method are the same as the abovementioned advantages of the device according to this invention.

In the case of the device according to this invention the abovementioned carrier is preferably made up of a number of elongated carrier elements extending beside each other transversely to the direction of conveyance and having a space between them. In this way a simple carrier in which a sufficiently large part of the surface is open is obtained. It also means that the lower side of the building elements is easy to reach for any application means disposed below the carrier.

Said carrier elements are best provided on the bearing side with a surface made of an elastic material, which can be, for example, a layer of rubber. This means that the surface coating applied to the building elements suffers little or no damage through the contact with the carrier.

In a preferred embodiment the conveyor is provided so that it makes the building elements tilt during their movement. The result is that all side surfaces of the building elements are taken treated even better within the range of the application means during their conveyance on the carrier.

In order to make the building elements tilt during their conveyance, the device is preferably designed in such a way that said device comprises at least two carriers which connect to each other by way of a level difference so that during their conveyance the building elements at the level of each level difference fall down onto the next carrier. This level difference can be, for example, a step-shaped level difference. The tilting of the building elements is consequently achieved in a relatively simple manner. The various carriers can be driven jointly or individually here.

In a particularly preferred embodiment each carrier is an endless carrier which is driven so that it runs in a circular movement over guide pulleys.

In a particularly advantageous embodiment of this device, said device comprises a number of spray nozzles (or equivalent spreading means) which are connected to a supply line through which the surface coating material can be supplied in liquid form. Said spray nozzles are disposed in such a way that the covering material comes out of the spray nozzles and goes onto the building elements. The surface coating material can be sprayed onto or sprinkled onto the building elements here.

The device can also be equipped to collect surface coating material and return it to the application means. In that way the surface coating material not adhering to the building elements can be reused. In order to apply the surface coating to the building elements in ideal conditions, it may be necessary to moisten the building elements or remove dust from them beforehand. For this purpose, provision can be made for automatic moistening of or removal of dust from the building elements before the latter are provided with the surface coating.

In its most preferred embodiment the device according to the invention is provided for the application of a lime render to a series of masonry building elements, such as, for example, facing bricks. Said facing bricks can undergo another treatment beforehand. For instance, they can, inter alia, be barrel-polished.

The method according to this invention can also be used for the application of lime render to a series of brick building elements, such as facing bricks, and is preferably used on a device according to this invention.

In what follows a possible preferred embodiment of a device according to this invention will be described in greater detail, with the object of explaining and adding to the features of the invention. It should be clear that the description which follows cannot be interpreted as a limitation of the scope of protection for this invention as defined in the claims or of its field of application.

In this description reference will be made by means of reference numerals to the appended drawings, in which:

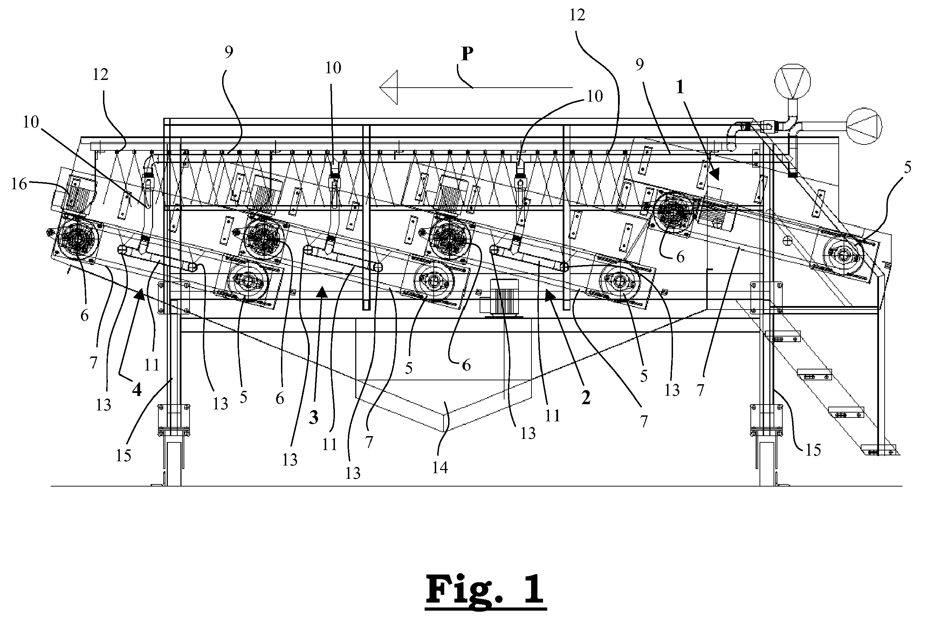

Figure 1 is a diagrammatic side view of a device according to the invention, and

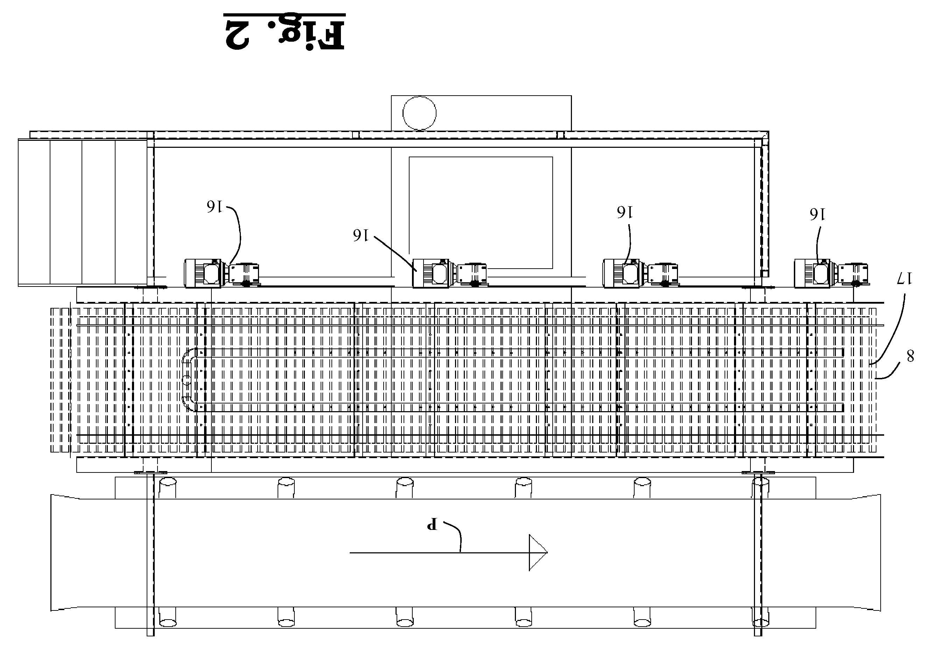

Figure 2 is a diagrammatic top view of the device shown in Figure 1.

The device shown in the figures comprises a frame (15) on which a conveyor (1), (2), (3), (4) and a series of spray nozzles (12), (13) are fixed. The spray nozzles (12), (13) are connected to supply lines (9), (10), (11) through which lime render can be supplied from a tank (not shown in the figures). The conveyor (1), (2), (3), (4) is provided for the purpose of moving a through-running stream of facing bricks past said spray nozzles (12), (13).

The conveyor (1) is composed of four conveyor belts (1), (2), (3), (4), which are disposed one after the other and are provided for the purpose of conveying facing bricks. The direction of conveyance is indicated by the arrow (P). Said conveyor belts have a width of, for example, 800 mm and a length of 1250 mm. Each conveyor belt (1) - (4) comprises a guide pulley (5) and a drive pulley (6), which are disposed at a distance from each other, and over which an endless belt (7) runs. The drive pulley (6) can be driven by means of an electric motor (8), so that the belt (7) is also driven around the drive pulley (6) and the guide pulley (5). The belt (7) here is moved along the top in the direction of conveyance (P). The electric motors used can be, for example, motors with a power of 0.92 kW.

The belts (7) are composed substantially of a series of rod-shaped elements (8) which, extending transversely to the direction of conveyance (P) and in each case with a distance between the successive elements (8), are connected to each other side by side to form an endless belt. These rod-shaped elements (8) are preferably of a cylindrical shape with a diameter of 20 mm. The distance between them is such that apertures with a maximum width are obtained, so that the facing bricks still cannot fall between the rod-shaped elements. This distance between the elements is, for example, 52 mm, measured between the axes of successive elements (8). Said rod-shaped elements (8) are covered with a layer of rubber.

In the case of the successive conveyor belts (1) - (4) the drive pulley (6) in each case is disposed at a higher level than the guide pulley (5), so that each belt (7) forms a bearing surface sloping upwards in the direction of conveyance (P). It should be clear that said sloping arrangement, whilst not being essential, nevertheless has the advantage that the successive belts (10) - (13) take up less space. For instance, in the case of each pair of successive conveyor belts (1), (2); (2), (3); (3), (4) it is ensured that the discharge side of the first conveyor belt is situated above the second conveyor belt, so that at each transition to the next conveyor belt the facing bricks supplied fall down onto said next conveyor belt.

Through their fall onto the elastic external coating of the rod-shaped elements (8), also referred to as bars, the facing bricks in each case bounce up and down a number of times, with the result that in most cases they land on a different side on the next conveyor belt. Owing to the fact that the facing bricks make several of such falling movements, all sides of the facing bricks are exposed to the spray nozzles (12, (13) during their conveyance, so that they are completely covered with the lime render.

Above the conveyor belts (1) - (4) runs an upper line (9) in which a series of downwardly directed apertures or spray nozzles (12) are provided next to each other. After the first conveyor belt (1), a pipe (11) is provided below the upper part of the successive belts (7) which serves as a bearing surface, which pipe runs parallel to the belts (7), and in which upwardly directed apertures or spray nozzles (13) are provided. Said pipe (11) is connected by way of a branch (10) to the abovementioned upper line (9), so that the lime render can also be sprayed from these upwardly directed spray nozzles (13) onto the facing bricks by way of the spaces between the rod-shaped elements (8) of the belts (7).

The lime render is pumped by means of a pump not shown in the figures. A pump with a power of 0.75 kW and a capacity of 280 1/min can be used for this purpose. The supply lines for the lime render have, for example, an external diameter of 50 mm. The spray nozzles can be designed with an internal diameter of 12 mm.

The frame (15) also bears a collecting receptacle (14), which extends transversely to the direction of conveyance (P) below the conveyor belts (1) - (4). The lime render which does not adhere to the facing bricks goes into this receptacle (14). The collected lime render is returned to the tank by way of a discharge line not shown in the figures, and is therefore conveyed back again to the spray nozzles (12), (13).

The lime render used is, for example, a mix of cement, chalk, lime, sand, water and pigments (for example, oxides) in proportions that are dependent upon the desired effect. Water-repellent agents may also be added if desired. The pigments can be either natural or synthetic pigments. Cement and water, for example, are present in this mix in a proportion of 1 kg of cement to 3 litres of water.

The dry prefabricated composition of a lime render powder (which has to be mixed with water) is, for example, as follows: 60% white cement, 40% yellow chalk, with the addition of 30% of white sand 0/2 to this mix. The addition of manganese oxide produces a dark brown colour. By adding to this part by volume three parts by volume of water, we obtain an example of a possible surface coating which can be used in the device or in the method according to this invention.

## Claims

1. Device for applying a lime-containing surface coating to building elements, **characterized in that** the device comprises a conveyor (1), (2), (3), (4) with at least one carrier (7) on which a series of building elements can be moved past a number of application means (12), (13) which are provided so that they apply the abovementioned surface coating to the building elements, **in that** the abovementioned carrier (7) comprises at least one aperture (17), and **in that** at least one application means (12), (13) is disposed above and/or below said carrier (7).

2. Device for applying a lime-containing surface coating to building elements according to Claim 1, **characterized in that** the abovementioned carrier (7) is made up of a number of elongated carrier elements (8) extending transversely to the direction of conveyance (P) and having a space between them.

3. Device for applying a lime-containing surface coating to building elements according to Claim 2, **characterized in that** the abovementioned carrier elements (8) at least on the bearing side comprise a surface made of an elastic material.

4. Device for applying a lime-containing surface coating to building elements according to one of the preceding claims, **characterized in that** the conveyor (1) - (4) is provided so that it makes the building elements tilt during their movement.

5. Device for applying a lime-containing surface coating to building elements according to one of the preceding claims, **characterized in that** the conveyor (1) - (4) comprises at least two carriers (7) which connect to each other by way of a level difference so that during their conveyance the building elements at the level of each level difference fall down onto the next carrier (7).

6. Device for applying a lime-containing surface coating to building elements according to Claim 5, **characterized in that** the abovementioned carriers (7) can be driven either jointly or individually.

7. Device for applying a lime-containing surface coating to building elements according to one of the preceding claims, **characterized in that** the device comprises a number of spray nozzles (12), (13) which are connected to a supply line (9), (10), (11) in order to supply the surface coating material in liquid form and to spray or sprinkle it onto the building elements.

8. Device for applying a lime-containing surface coating to building elements according to one of the preceding claims, **characterized in that** the device is equipped to collect surface coating material and return it to the application means (12), (13).

9. Device for applying a lime-containing surface coating to building elements according to one of the preceding claims, **characterized in that** each carrier (7) is an endless carrier which is driven so that it runs in a circular movement over guide pulleys.

10. Device for applying a lime-containing surface coating to building elements according to one of the preceding claims, **characterized in that** the device is equipped for automatic moistening of the building elements before the latter are provided with the surface coating.

11. Device for applying a lime-containing surface coating to building elements according to one of the preceding claims, **characterized in that** the device is equipped for automatic removal of dust from the building elements before the latter are provided with the surface coating.

12. Device for applying a lime-containing surface coating to building elements according to one of the preceding claims, **characterized in that** the device is equipped for applying a lime render to a series of masonry building elements, such as facing bricks.

13. Method for applying a lime-containing surface coating to building elements, **characterized in that** a series of loose building elements are placed on an open carrier (7), and **in that** the surface coating material is applied to the building elements from the upper side of the carrier (7) and/or from the lower side of the carrier (7), and **in that** the surface coating material is then allowed to dry.

14. Method for applying a lime-containing surface coating to building elements according to one of the preceding claims, **characterized in that** a lime render is applied to a series of masonry building elements, such as facing bricks.

15. Method for automatically applying a lime-containing surface coating to building elements, **characterized in that** the method is used on a device according to one of Claims 1 to 12.
